# EUROPÄISCHE PATENTSCHRIFT

(11) **EP 0 730 894 B1**
(45) Veröffentlichungstag und Bekanntmachung des Hinweises auf die Patenterteilung: **11.10.2000**
(21) Anmeldenummer: 96100097.3
(22) Anmeldetag: 05.01.1996
(51) Int. Cl.: B01D 17/02, B01D 61/14, B01D 61/16

(54) **Verfahren und Vorrichtung zur Phasenseparation**
Phase separation process and apparatus
Procédé et dispositif de séparation de phases

(30) Priorität: 09.03.1995 DE 19508296
(43) Veröffentlichungstag der Anmeldung: 11.09.1996
(73) Patentinhaber: HYDAC FILTERTECHNIK GmbH, D-66273 Sulzbach (DE)
(72) Erfinder: Gudernatsch, Wilhelm, Dr.-Ing., D-70193 Stuttgart (DE); Kimmerle, Klaus, Dr.-Ing., D-66424 Homburg (DE)
(74) Vertreter: Patentanwälte Bartels und Partner

(56) Entgegenhaltungen:
- EP-A- 0 385 119
- DE-A- 2 546 579
- DE-U- 9 300 595
- GB-A- 2 257 375
- US-A- 5 183 572
- US-A- 5 227 071
- PATENT ABSTRACTS OF JAPAN vol. 012, no. 139 (C-491), 27.April 1988 & JP 62 254809 A (DAIKIN IND LTD), 6.November 1987,

## Beschreibung

Die Erfindung betrifft ein Verfahren zum Auftrennen eines Verunreinigungen aufweisenden Fluidgemisches in mindestens zwei seiner Bestandteile sowie eine Vorrichtung zum Durchführen dieses Verfahrens. Dahingehende Verfahren und Vorrichtungen sind der Fachwelt bekannt und werden in einer Vielzahl von Branchen angewendet, wie in der chemischen Industrie, der Metallindustrie, der Lebensmittelindustrie, der Halbleiterindustrie sowie bei der biotechnischen und pharmazeutischen Industrie. Die bekannten Verfahren und Vorrichtungen finden jedoch ihre Grenzen, wenn es darum geht, kostengünstig und effizient Gemische, im wesentlichen bestehend aus nichtwässrigen Flüssigkeiten und Wasser, oder nichtwässrigen Flüssigkeitsgemischen verschiedener Dichte, oder Emulsionen von wässrigen oder nichtwässrigen Flüssigkeiten voneinander zu trennen, um diese separat zu erhalten.

Durch die DE 37 06 888 A1 ist es bekannt, ein Flüssigkeitsgemisch einer mindestens zweistufigen Schwerkrafttrennung zu unterwerfen, wobei das Flüssigkeitsgemisch zunächst in eine leichtere und eine schwerere Phase getrennt wird. Anschließend kann die jeweils derart erhaltene Phase wiederum in zwei Phasen - eine leichtere und eine schwerere - aufgetrennt werden. Diese bekannte Art der Phasentrennung erlaubt keine vollständige Trennung, da die leichtere Phase in geringem Anteil immer in der schweren Phase und die schwere Phase wiederum in geringem Anteil in der leichteren Phase zu finden ist.

Durch JP-Abstract 62-254 809 (A) ist eine Kreislaufführung mit Filterelement bekannt, die der Abtrennung von Wasser aus organischen Lösungsmitteln dient, wobei nach einem ersten Separationsschritt das noch Wasser enthaltende Lösungsmittel durch eine Pumpe einem Filter zugeführt wird und danach das Lösungsmittel in einem Tank gespeichert und das Wasser in den Trennbehälter zurückgeführt wird. Hierbei kann es zu einer ungewollten Aufkonzentrierung der jeweils geringeren Anteile in den Phasen kommen. Eine vollständige Auftrennung des dahingehenden Fluidgemisches ist mithin nicht möglich.

Die DE 93 00 595 U offenbart ein Verfahren zum Auftrennen eines Fluidgemisches mittels eines Phasentrenners in Form eines Abscheiders und einer Filtereinheit, wobei das Retentat der Filtereinheit zusammen mit einem Verunreinigungen aufweisenden Fluidgemisch wiederholt dem Phasentrenner zugeführt wird. Mit dieser bekannten Lösung wird nur eine Phase des Phasentrenners über die Filtereinheit weiter behandelt und die Filtereinheit übernimmt keine weitere Aufbereitung des entstehenden Retentates. Eine vollständige effiziente Auftrennung dahingehender Fluidgemische mit der bekannten Lösung ist nicht möglich, da die eine aufgetrennte Phase immer unbehandelt bleibt und es zu Aufkonzentrierungsprozessen im Abscheider kommt.

Die US-A-5 183 572 zeigt ein vergleichbares Verfahren mit einem Phasentrenner, wobei wiederum eine durch einen Abscheider als Phasentrenner erhaltene Phase einer Filtereinheit und das Filtrat der Filtereinheit nach Durchlaufen eines Anwendungsschrittes zusammen mit den dabei entstehenden Verschmutzungen wiederholt dem Phasentrenner zugeführt werden. Auch hierbei kommt es zu Aufkonzentrationsvorgängen auf der Filtereingangsseite der Filtereinheit, und eine vollständige Auftrennung der Phasen eines verunreinigten Fluidgemisches ist nicht möglich.

Ausgehend von diesem Stand der Technik liegt der Erfindung die Aufgabe zugrunde, ein Verfahren zu schaffen, das eine vollständige Auftrennung dahingehender Fluidgemische effizient und kostengünstig zuläßt sowie eine Vorrichtung zum Durchführen des Verfahrens. Diese Aufgabe wird mit den Merkmalen des Anspruches 1 bzw. mit den Merkmalen des Anspruches 6 gelöst.

Dadurch, daß mit den Merkmalen des Anspruches 1 mittels eines Phasentrenners der eine Unterphase bildende eine Bestandteil des Fluidgemisches von dem anderen eine Oberphase bildenden Bestandteil getrennt wird, daß jeder abgetrennte Bestandteil in einer separaten Kreislaufführung jeweils einer Filtereinheit zugeführt wird, bei der als Filtrat die Phasen getrennt voneinander ausgeschieden werden, und daß wiederholt ein Teil des aus der jeweiligen Filtereinheit austretenden Retentates dem Phasentrenner und der andere Teil des Retentates erneut der jeweiligen Filtereinheit zugeführt wird, erfolgt wiederholt ein Kreislauf über den Phasentrenner und gleichzeitig wiederholt ein Kreislauf vom retentatseitigen Filterausgang zum Filtereingang.

Die Unterphase ist bei den vorbeschriebenen Gemischen meist durch die wässrigen Flüssigkeiten oder Wasser gebildet, wohingegen die Oberphase aus nichtwässrigen Flüssigkeiten bestehen kann. Bei Gemischen von wässrigen Flüssigkeiten mit Emulsionen bildet die jeweilige Emulsion die Oberphase und bei Gemischen von nichtwässrigen Flüssigkeiten mit Emulsionen bilden die letzteren die Unterphase. Bei den nichtwässrigen Flüssigkeitsgemischen hingegen bildet die jeweilige Oberphase die Flüssigkeit mit der geringeren Dichte. Für Flüssigkeiten mit höherer Dichte als Wasser, z. B. FCKW, gilt das Vorbeschriebene analog. Durch die wiederholte, teilweise Rückführung der angereicherten Anteile in Form des Retentates vor den Phasentrenner wird deren Aufkonzentrierung verhindert und eine vollständige Auftrennung der vorbeschriebenen Gemische ist mit dem erfindungsgemäßen Verfahren ermöglicht, wozu die wiederholt stattfindende Filtration des Retentates zusammen mit der jeweils aufgetrennten Phase mit beiträgt. Durch die wiederholte, teilweise Rückführung der Oberphase vor den Phasentrenner wird die Aufkonzentrierung der Unterphase in die Oberphase verhindert. Ebenso ist durch die wiederholte, teilweise Rückführung der Unterphase vor den Phasentrenner eine Aufkonzentrierung der Oberphase in der Unterphase vermieden.

Als Phasentrenner kommen Trennvorrichtungen in Frage, die die Abscheidung der Unterphase von der Oberphase des Fluidgemisches ermöglichen, wie beispielsweise Absetzvorrichtungen, bei denen nach einer vorgebbaren Verweilzeit in einem Behälter die Oberphase durch Auftriebskräfte von der Unterphase getrennt ist und anschließend die derart voneinander getrennten Phasen das angesprochene Behältnis verlassen. Vorzugsweise wird jedoch als Phasentrenner ein sog. Coalisier-Plattenseparator eingesetzt, der neben einem hohen Wirkungsgrad auch hohe Durchflußraten an voneinander zu trennenden Bestandteilen aufweist. Die mittels des Phasentrenners voneinander getrennten Bestandteile mit ihren Verunreinigungen werden dann jeweils an eine separate Kreislaufführung mit einer Filtereinheit weitergegeben, die die kontinuierliche Ausscheidung der Filtrate - zum einen die Unterphase, zum anderen die Oberphase - ermöglicht sowie die Abscheidung von jeweils einem Verunreinigungen aufweisenden Konzentrat aus der jeweiligen Kreislaufführung.

Bei einer bevorzugten Ausführungsform des erfindungsgemäßen Verfahrens wird als Filtereinheit ein Querstromfilter verwendet, durch das mittels einer Fördereinrichtung der zu filtrierende abgetrennte Bestandteil hindurchgeführt wird, wobei in den zugehörigen Querstromfiltern die Oberphase bzw. die Unterphase abfiltriert werden. Bei der Querstromfiltration verhindert die sehr starke Strömung parallel zur Filteroberfläche des innerhalb der jeweiligen Kreislaufführung eingesetzten Querstromfilters laufend den Aufbau eines Filterkuchens, so daß dieser den eigentlichen Filtrationsfluß nicht beeinträchtigen kann. Darüber hinaus ist mit der Querstromfiltration die gleichzeitige Weiterverarbeitung von Retentat und Filtrat möglich. Mittels der Querstromfiltration werden die zur kontinuierlichen Fahrweise des Verfahrens benötigten zwei Produktströme erhalten, wobei das Filtrat als die reine Phase das gewünschte Endprodukt darstellt. Das Retentat ist die bei der Filtration entstehende verunreinigte Phase, die auch als Konzentrat bezeichnet ist und die in einem Filtrationskreislauf sowie anteilig wiederholt vor den Phasentrenner rückgeführt wird.

Flüssigkeitsgemische aus organischen Lösungsmitteln und Wasser mit und ohne Emulgatoren, wie sie sich mit dem erfindungsgemäßen Verfahren beispielsweise trennen lassen, fallen unter anderem bei Reinigungsprozessen an. Die hierbei auftretenden Verunreinigungen werden zuerst durch das Lösungsmittel an- und aufgelöst, so daß sich deren Hauptanteil im Lösungsmittel befindet. Das Lösungsmittel selbst wird dann anschließend durch Wasser abgespült, wobei häufig Mischungen mit einem Lösungsmittelgehalt von 15 % bis 80 % entstehen. Die eigentlichen Lösungsmittel sind auf mineralischer oder pflanzlicher Basis hergestellt. Eine Klasse der Lösungsmittel zeichnet sich dabei durch hohe Siedepunkte, meist >200°C, niedrige Dampfdrücke bei Umgebungstemperatur meist <0,5 mbar, niedriger Viskosität meist < 10 mPas und kleinere Dichte als Wasser, meist ca. 0,8g/cm³, aus. Sie sind in der Regel nicht mischbar mit Wasser. Um das Entfernen des Lösungsmittels dennoch zu gewährleisten, wird entweder dem Waschwasser oder dem Lösungsmittel ein Lösungsvermittler zugegeben, was zur Bildung von Emulsionen führt, die dauerstabil oder nicht dauerstabil sein können. Mit dem beanspruchten Verfahren ist jedoch die Auftrennung dieser Gemische derart möglich, daß sowohl das Lösungsmittel als auch das Waschwasser erneut für den wiederholten Gebrauch zur Verfügung stehen. Es sind auch andere Anwendungen des erfindungsgemäßen Verfahrens denkbar, bei denen dann ein ölhaltiges, mit Verunreinigungen versehenes Fluid von Wasser getrennt wird.

Bei einer weiteren bevorzugten Ausführungsform des erfindungsgemäßen Verfahrens wird in Fließrichtung des Fluidgemisches vor dem Phasentrenner eine Rohlösung, bestehend aus diesem Fluidgemisch, mit den Verunreinigungen einem Vorfilter zugeführt, der die groben Verunreinigungen abtrennt. Vorzugsweise wird hierbei zwischen dem Phasentrenner und dem Vorfilter die von groben Verunreinigungen befreite Rohlösung einer Absetzvorrichtung zugeführt, die zumindest teilweise sedimentierende Verunreinigungen abscheidet. Das Fluidgemisch, das dann dem Phasentrenner zugeführt wird, ist mithin von groben und sedimentierenden Verunreinigungen weitgehend befreit.

Bei einer weiteren bevorzugten Ausführungsform des erfindungsgemäßen Verfahrens wird das innerhalb der jeweiligen Kreislaufführung aus dem jeweiligen Querstromfilter austretende Retentat zumindest teilweise in einem Teilstrom zur Absetzvorrichtung rückgeführt. Dieser Teilstrom kann wiederholt sedimentieren und wiederholt der Phasentrennung unterzogen werden, so daß es bei der jeweiligen Konzentratphase nicht zu einer Anreicherung von der jeweils anderen zu filtrierenden und als Filtrat auszuscheidenden Phase kommt.

Zum Durchführen des beschriebenen erfindungsgemäßen Verfahrens dient eine Vorrichtung mit einem Phasentrenner sowie mit mindestens zwei Filtereinheiten, die jeweils Teil einer separaten Kreislaufführung sind, wobei der Phasentrenner wiederholt einen Teil aus der jeweiligen Filtereinheit austretenden Retentats und die Filtereinheiten wiederholt den anderen Teil des Retentates zugeführt bekommen. Insbesondere ist eine Vorrichtung vorgesehen, bei der jede Kreislaufführung einen Behälter aufweist, dessen Inhalt mittels der Fördereinrichtung der Filtereinheit zuführbar ist, die eine Abgabemöglichkeit für das Filtrat aufweist, wobei über eine sich verzweigende Rohrleitung ein Teil des Retentates aus der Filtereinheit in den Behälter zurückfließt und der andere Teil des Retentates dem Phasentrenner über einen weiteren Behälter zugeführt wird.

Durch die Querstromfiltration entstehen also zwei Retentate (Konzentrate) und zwei Filtrate, wobei die Filtrate Unterphase und Oberphase die gewünschten Produkte sind, die aus der Vorrichtung ausgeleitet werden. Die Retentate werden in den jeweiligen Behälter zurückgeführt und dabei dort kontinuierlich aufkonzentriert. Bei einer bevorzugten Ausführungsform der erfindungsgemäßen Vorrichtung weist der jeweilige Behälter eine Ablaßstelle für das entstehende Konzentrat auf und über die sich verzweigende Rohrleitung ist in einem Teilstrom teilweise das aus der Filtereinheit austretende Retentat an die Absetzvorrichtung rückführbar, so daß eine unerwünschte Aufkonzentrierung in der eigentlichen Konzentratphase vermieden ist. In den jeweiligen Behältern werden auch partikulare Bestandteile aufkonzentriert, die wiederum durch die teilweise Rückführung im Phasentrenner sedimentieren können.

Bei einer weiteren bevorzugten Ausführungsform der erfindungsgemäßen Vorrichtung ist die Absetzvorrichtung Teil eines Rohlösungsbehälters, der einen fluidundurchlässigen Schrägboden aufweist, auf dem sich die sedimentierenden Verunreinigungen absetzen können, wobei der Vorfilter für die groben Verunreinigungen zwischen einem Zulauf der Rohflüssigkeit und dem Rohlösungsbehälter angeordnet ist, dessen Auslaß an den Einlaß des Phasentrenners angeschlossen ist. Mit zunehmender Aufkonzentrierung der stabil emulgierten Anteile und der nicht sedimentierenden Verunreinigungen sinkt insgesamt die Filtratleistung der Vorrichtung. Außerdem kann die Kapazität des Rohlösungsbehälters durch die auf dem Schrägboden abgesetzten Sedimente erschöpft sein. In diesen Fällen wird die Vorrichtung vollständig entleert und das jeweilige Konzentrat einer geordneten Entsorgung zugeführt.

Als Fördereinrichtungen finden vorzugsweise Fluidpumpen Verwendung, wobei jedoch die Rohlösung der Vorrichtung auch über einen ventilüberwachten freien Zulauf erfolgen kann. Vorzugsweise finden des weiteren alle Teile der Vorrichtung auf einem verfahrbaren Transportwagen Platz, der an zentraler Stelle eine Bedien- und Überwachungseinrichtung für den Verfahrensablauf aufweist. Aufgrund dieser mobilen Anordnung läßt sich die Vorrichtung an einer Vielzahl verschiedener Stellen einsetzen.

Im folgenden werden das erfindungsgemäße Verfahren und die Vorrichtung anhand der Zeichnung näher erläutert.

Es zeigen in prinzipieller und nicht maßstäblicher Darstellung die
- Fig.1: eine Verfahrensübersicht des erfindungsgemäßen Verfahrens,
- Fig.2: in zwei Seitenansichten und in Draufsicht die Vorrichtung zum Durchführen des Verfahrens nach der Fig.1, wobei in den Darstellungen
B1 bis B3 Behälter
F1 Vorfi Iter
K2, K3 Kreislaufführungen
LS1 bis LS3 Niveauschalter
M2,M3 Querstromfilter
P1 bis P3 Fluidpumpen
PI2,PI3 Druckanzeiger
T1 Phasentrenner
V1, V2,V3 Ablaßventile sind.

Am Beispiel von nichtwässrigen Flüssigkeiten, im weiteren Lösungsmittel genannt und Wasser, soll die Funktionsweise des Verfahrens und der Vorrichtung nunmehr näher erläutert werden.

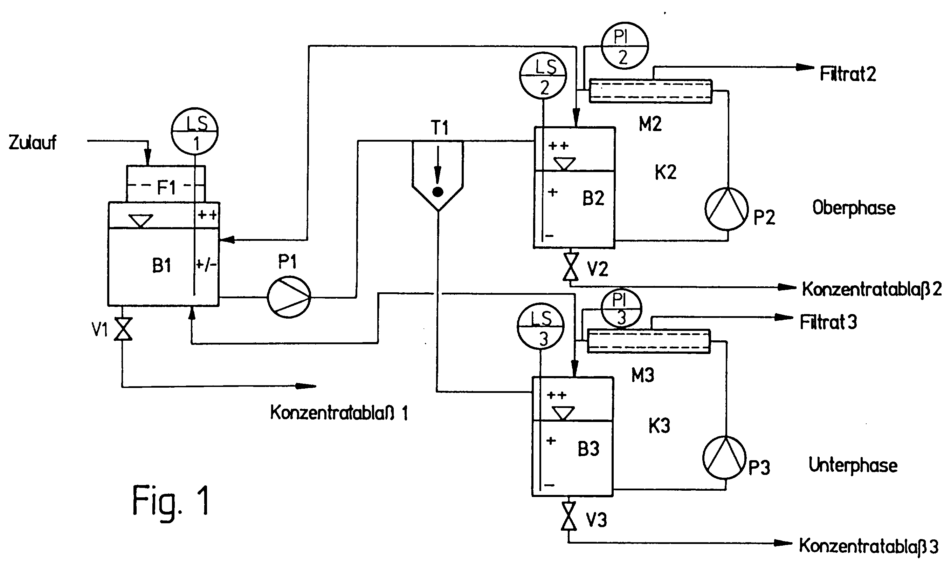

Die zur Aufarbeitung anstehende Rohlösung, die nach der Fig.1 über den Zulauf der Vorrichtung zugeführt wird, soll aus einer Wasserphase mit Verunreinigungen, einer Lösungsmittelphase mit Verunreinigungen sowie zeitweise oder auf Dauer emulgierten Bestandteilen bestehen, wobei mit dem Verfahren die folgenden physikalischen Trennaufgaben gelöst sind:
- Abtrennung der groben Verunreinigungen,
- Abtrennung sedimentierender Verunreinigungen,
- Auftrennung der Phasen,
- Auftrennung oder Konzentrieren der Emulsion,
- Filtration der Wasserphase als Unterphase,
- Filtration der Lösungsmittelphase als Oberphase.

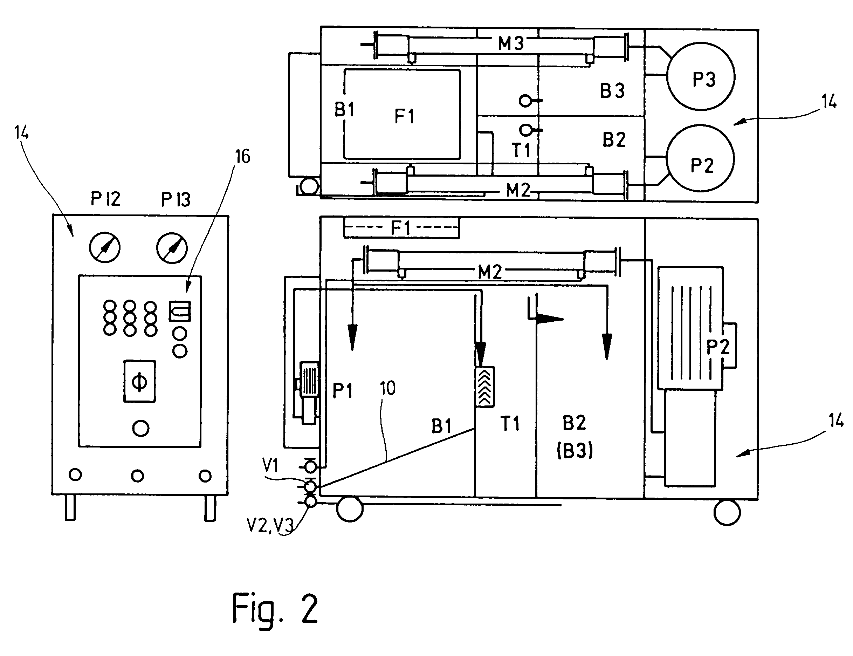

Der dem Zulauf nachgeordnete Vorfilter F1 dient der Abtrennung der groben Verunreinigungen aus der angesprochenen Rohlösung, die dem Behälter B1 zugeführt wird. Dies geschieht im vorliegenden Fall durch die Speisepumpe (nicht dargestellt), kann jedoch auch über einen ventilüberwachten freien Zulauf (nicht dargestellt) erfolgen. Die von groben Verunreinigungen gereinigte Rohflüssigkeit befindet sich im Behälter B1 in Ruhe, so daß sich sedimentierende Bestandteile auf dem schrägen Boden 10, der der Einfachheit halber nur in der Fig.2 dargestellt ist, absetzen können.

Die Pumpe P1 fördert dann die Rohlösung in den Phasentrenner T1, der eine Auftrennung in eine lösungsmittelreiche sowie in eine wasserreiche Ober- bzw. Unterphase vornimmt, die dem Behälter B2 bzw. dem Behälter B3 zugeführt wird. Als Phasentrenner T1 dient beispielsweise ein sog. Coalisier-Plattenseparator, der von der Firma Facet Deutschland GmbH bezogen werden kann.

Dieser Separator besteht im wesentlichen aus sog. Coalisier-Plattenpaketen, wobei die Platten wellblechartig ausgebildet und übereinanderliegend angeordnet sind. Die Durchströmung des jeweiligen Plattenpaketes erfolgt quer zu den Wellen und längs des jeweiligen Wellenkammes sind dem Durchmesser nach an das jeweilige Lösungsmittel angepaßte Auslaßöffnungen vorhanden, aus denen das Lösungsmittel auf der Oberseite des Paketes austritt und ansonsten von einer Platte zur nächsten wechseln kann. Berührt ein Lösungsmitteltröpfchen die Oberfläche der oleofilen Coalisierplatten, verhindert die Heftkraft an diesen Platten ein Lösen der Tropfen, die sich dann in immer größer werdenden Konzentrationen zu den Wellenbergen hinbewegen und dort über die angesprochenen Auslaßöffnungen abgeschieden werden können.

Mit den Kreislaufpumpen P2 und P3 wird der lösungsmittelreiche Bestandteil bzw. der wasserreiche Bestandteil mit seinen Verunreinigungen über die zugeordneten Querstromfilter M2 und M3 in einer jeweils separaten Kreislaufführung K2, K3 gefördert. Die angesprochenen Querstromfilter M2 und M3 sind in verschiedensten Bauformen von der Firma Sempas Membrantechnik GmbH erhältlich und bestehen im wesentlichen aus einem länglichen Membranrohr, durch das in Blickrichtung auf die Figuren gesehen von rechts nach links die jeweilige zu filtrierende Fluidphase strömt. Eine Besonderheit der Querstromfilter ist, daß sie sich nicht ohne weiteres verbrauchen, d.h. die Filtrationsleistungen der verwendeten Membranen bleiben lange Zeit nahezu konstant und die sonst üblichen Filterwechsel bei Filtereinheiten können weitgehend entfallen. Über das Durchströmen des Membranmaterials von innen nach außen wird dann das jeweilige Filtrat in reiner Form erhalten, wobei das Filtrat 2 nach der Fig.1 das Lösungsmittel ist und das Filtrat 3 filtriertes Wasser darstellt.

Neben den beiden Filtraten 2 und 3, filtriertes Lösungsmittel bzw. filtriertes Wasser, werden die als Retentate bezeichneten Konzentrate aus den Querstromfiltern M2,M3 in den jeweils zugeordneten Arbeitsbehälter B2 bzw. B3 zurückgeführt und dabei dort kontinuierlich aufkonzentriert. Damit sich hierbei in der Konzentratphase nicht die Verunreinigungen und die jeweilige andere Phase mit aufkonzentrieren, wird ein Teilstrom aus jeder Kreislaufführung in den Rohlösungsbehälter B1 und mithin vor den Phasentrenner T1 geleitet. Der jeweils derart rückgeführte Teilstrom wird dann wiederholt sedimentieren und wiederholt der Phasentrennung unterzogen werden.

Mit zunehmender Aufkonzentrierung der stabil emulgierten Anteile und der nicht sedimentierenden Verunreinigungen sinkt die Filtratleistung. Außerdem kann die Kapazität des Behälters B1 durch Sedimentablagerung erschöpft sein. In diesen Fällen muß die Vorrichtung entleert werden und das jeweilige Konzentrat kann einer geordneten Entsorgung zugeführt werden. Hierzu weist jeder Behälter B1 bis B3 eine Ablaßstelle V1, V2, V3 auf, wobei die Ablaßmöglichkeiten für die Behälter B1 bis B3 in der Fig.1 auch mit Konzentratablaß 1,2 bzw. 3 bezeichnet sind.

Wie insbesondere die Darstellung nach der Fig.2 zeigt, lassen sich alle Komponenten der Vorrichtung, mit denen das Verfahren durchführbar ist, auf einem verfahrbaren Transportwagen 14 anordnen, der an einer seiner Stirnseiten, die dem Betrachter der Fig.2 zugewandt ist, eine als Ganzes mit 16 bezeichnete Bedien- und Überwachungseinrichtung für den Verfahrensablauf aufweist. Die in den Figuren mit LS1 bis LS3 bezeichneten Schalteinrichtungen sind sog. Niveauschalter und dienen mit dazu, in Abhängigkeit von dem Befüllungszustand der Behälter B1 bis B3 den Verfahrensablauf zu steuern. Zur Drucküberwachung in den Kreislaufführungen dienen wiederum die mit PI2 und PI3 bezeichneten Druckanzeiger. Neben den angesprochenen Lösungsmitteln würden sich auch ölartige Flüssigkeiten über das erfindungsgemäße Verfahren erhalten lassen. Der Prozeßablauf und der Vorrichtungsaufbau entsprechen insofern dem vorhergehend Beschriebenen. Durch die Festlegung der Reihenfolge, erst Phasentrennung und Sedimentation, dann Querstromfiltration der Phasen, kommt es zu der vollständigen effizienten Auftrennung bei den beschriebenen Fluidgemischen.

## Patentansprüche

1. Verfahren zum Auftrennen eines Verunreinigungen aufweisenden Fluidgemisches in mindestens zwei seiner Bestandteile, wobei mittels eines Phasentrenners (T1) der eine Unterphase bildende eine Bestandteil des Fluidgemisches von dem anderen eine Oberphase bildenden Bestandteil getrennt wird, wobei jeder abgetrennte Bestandteil in einer separaten Kreislaufführung (K2, K3) jeweils einer Filtereinheit (M2, M3) zugeführt wird, bei der als Filtrat die Phasen getrennt voneinander ausgeschieden werden und wobei wiederholt ein Teil des aus der jeweiligen Filtereinheit (M2, M3) austretenden Retentates dem Phasentrenner (T1) und der andere Teil des Retentates der jeweiligen Filtereinheit (M2, M3) zugeführt wird.

2. Verfahren nach Anspruch 1, dadurch gekennzeichnet, daß als jeweilige Filtereinheit ein Querstromfilter (M2, M3) verwendet wird, durch das mittels einer Fördereinrichtung (P2, P3) der zu filtrierende abgetrennte Bestandteil hindurchgeführt wird, und daß in den zugehörigen Querstromfiltern (M2, M3) die Oberphase bzw. die Unterphase abfiltriert werden.

3. Verfahren nach Anspruch 1 oder 2, dadurch gekennzeichnet, daß in Fließrichtung des Fluidgemisches vor dem Phasentrenner (T1) eine Rohlösung, bestehend aus diesem Fluidgemisch, mit den Verunreinigungen einem Vorfilter (F1) zugeführt wird, der die groben Verunreinigungen abtrennt.

4. Verfahren nach Anspruch 3, dadurch gekennzeichnet, daß zwischen dem Phasentrenner (T1) und dem Vorfilter (F1) die von groben Verunreinigungen befreite Rohlösung einer Absetzvorrichtung (B1, 10) zugeführt wird, die zumindest teilweise sedimentierende Verunreinigungen abscheidet.

5. Verfahren nach Anspruch 4, dadurch gekennzeichnet, daß das innerhalb der jeweiligen Kreislaufführung (K2, K3) aus dem jeweiligen Querstromfilter (M2, M3) austretende Retentat teilweise in einem Teilstrom zur Absetzvorrichtung (B1, 10) rückgeführt wird.

6. Vorrichtung zum Durchführen des Verfahrens nach einem der Ansprüche 1 bis 5, dadurch gekennzeichnet, daß ein Phasentrenner (T1) vorhanden ist sowie mindestens zwei Filtereinheiten (M2, M3), die jeweils Teil einer separaten Kreislaufführung (K2, K3) sind, und daß der Phasentrenner (T1) wiederholt einen Teil des an der jeweiligen Filtereinheit (M2, M3) austretenden Retentats und die Filtereinheiten (M2, M3) wiederholt den anderen Teil des Retentates zugeführt bekommen.

7. Vorrichtung zum Durchführen des Verfahrens nach Anspruch 6, dadurch gekennzeichnet, daß jede Kreislaufführung (K2, K3) einen Behälter (B2, B3) aufweist, dessen Inhalt mittels der Fördereinrichtung (P2, P3) der Filtereinheit (M2, M3) zuführbar ist, die ein Abgabemöglichkeit für das Filtrat aufweist, und daß über eine sich verzweigende Rohrleitung ein Teil des Retentates aus der Filtereinheit (M2, M3) in den Behälter (B2, B3) zurückfließt und der andere Teil des Retentates dem Phasentrenner (T1) über einen weiteren Behälter (B1) zugeführt wird.

8. Vorrichtung nach Anspruch 7, dadurch gekennzeichnet, daß der jeweilige Behälter (B1, B2, B3) eine Ablaßstelle (V1, V2, V3) für das entstehende Konzentrat aufweist und daß über die sich verzweigende Rohrleitung in einem Teilstrom teilweise das aus der Filtereinheit (M2, M3) austretende Retentat an die Absetzvorrichtung (B1, 10) rückführbar ist.

9. Vorrichtung nach Anspruch 8, dadurch gekennzeichnet, daß die Absetzvorrichtung (B1, 10) Teil eines Rohlösungsbehälters (B1) ist, der einen fluidundurchlässigen Schrägboden (10) aufweist, auf dem sich die sedimentierenden Verunreinigungen absetzen, und daß der Vorfilter (F1) für die groben Verunreinigungen zwischen einem Zulauf der Rohflüssigkeit und dem Rohlösungsbehälter (B1) angeordnet ist, dessen Auslaß an den Einlaß des Phasentrenners (T1) angeschlossen ist.

10. Vorrichtung nach Anspruch 9, dadurch gekennzeichnet, daß die Fördereinrichtungen für die Kreislaufführungen (K2, K3) und den Fluidtransport vom Rohlösungsbehälter (B1) zu dem Phasentrenner (T1) aus Fluidpumpen (P1, P2, P3) gebildet sind, daß der Phasentrenner (T1) aus einem Coalisier-Plattenseparator gebildet ist und daß die jeweilige Filtereinheit ein Querstromfilter (M2, M3) ist.

11. Vorrichtung nach einem der Ansprüche 7 bis 10, dadurch gekennzeichnet, daß sie mit all ihren Teilen auf einem verfahrbaren Transportwagen (14) angeordnet ist, der eine Bedien- und Überwachungseinrichtung (16) für den Verfahrensablauf aufweist.

## Claims

1. Process for separating a fluid mixture containing impurities into at least two of its constituents, in which case by means of a phase separator (T1), the one constituent of the fluid mixture forming a lower phase is separated from the other constituent forming an upper phase, each separated constituent being supplied in a separate circuit (K2, K3) respectively to a filter unit (M2, M3), in which the phases are separated from each other as filtrate and repeatedly a part of the retentate emerging from the respective filter unit (M2, M3) is supplied to the phase separator (T1) and the other part of the retentate is supplied to the respective filter unit (M2, M3).

2. Process according to Claim 1, characterised in that as the respective filter unit a cross-current filter (M2, M3) is used, through which by means of a conveying device (P2, P3), the separated constituent to be filtered is guided and that in the associated cross-current filters (M2, M3) the upper phase or the lower phase are filtered-off.

3. Process according to Claim 1 or 2, characterised in that in the flow direction of the fluid mixture before the phase separator (T1), a raw solution, consisting of this fluid mixture, with the impurities is supplied to a preliminary filter (F1), which separates the coarse impurities.

4. Process according to Claim 3, characterised in that between the phase separator (T1) and the preliminary filter (F1), the raw solution, from which coarse impurities have been removed, is supplied to a settling device (B1, 10), which separates the at least partly settling-out impurities.

5. Process according to Claim 4, characterised in that the retentate emerging within the respective circuit (K2, K3) from the respective cross-current filter (M2, M3) is partly returned in a partial flow to the settling device (B1, 10).

6. Apparatus for carrying out the method according to one of Claims 1 to 5, characterised in that a phase separator (T1) is provided, as well as at least two filter units (M2, M3), which are respectively part of a separate circuit (K2, K3), and that the phase separator (T1) repeatedly receives part of the retentate emerging from the respective filter unit (M2, M3) and the filter units (M2, M3) repeatedly receive the other part of the retentate.

7. Apparatus for carrying out the method according to Claim 6, characterised in that each circuit (K2, K3) comprises a container (B2, B3), whereof the contents can be supplied by means of the conveying device (P2, P3) to the filter unit (M2, M3), which has a delivery possibility for the filtrate and that by way of a branching pipe, a part of the retentate from the filter unit (M2, M3) flows back into the containers (B2, B3) and the other part of the retentate is supplied to the phase separator (T1) by way of a further container (B1).

8. Apparatus according to Claim 7, characterised in that the respective container (B1, B2, B3) comprises an outlet point (V1, V2, V3) for the concentrate produced and that by way of the branching pipe, in a partial stream, the retentate emerging from the filter unit (M2, M3) can be returned partly to the settling device (B1, 10).

9. Apparatus according to Claim 8, characterised in that the settling device (B1, 10) is part of a raw solution container (B1), which comprises an inclined base (10) impermeable to fluid, on which the settling-out impurities settle, and that the preliminary filter (F1) for the coarse impurities is located between an inlet for the raw fluid and the raw solution container (B1), whereof the outlet is connected to the inlet of the phase separator (T1).

10. Apparatus according to Claim 9, characterised in that the conveying devices for the circuits (K2, K3) and the fluid transportation from the raw solution container (B1) to the phase separator (T1) are formed from fluid pumps (P1, P2, P3), that the phase separator (T1) is formed from a coalescing plate separator and that the respective filter unit is a cross-current filter (M2, M3).

11. Apparatus according to one of Claims 7 to 10, characterised in that it is located with all its parts on a moving transportation carriage (14), which comprises an operating and monitoring device (16) for the progress of the process.

## Revendications

1. Procédé pour la séparation d'un mélange de fluides présentant des impuretés dans au moins deux de ses composants, caractérisé en ce que, au moyen d'un séparateur de phases (T1), on sépare un composant du mélange de fluides constituant une phase inférieure de l'autre composant constituant une phase supérieure, en ce que chaque composant ainsi séparé est amené dans un système de recyclage (K2, K3) séparé à une unité filtrante (M2, M3) respective, dans laquelle les phases sont évacuées séparément les unes des autres en tant que filtrats et qu'une partie du rétentat sortant de l'unité filtrante (M2, M3) respective est à nouveau amenée au séparateur de phases (T1), l'autre partie du rétentat étant amenée à nouveau à l'unité filtrante (M2, M3) respective.

2. Procédé selon la revendication 1, caractérisé en ce que l'unité filtrante respective est un filtre à flux transversal (M2, M3) à travers lequel est envoyé, par un système de dégagement (P2, P3), le composant séparé à filtrer, la phase supérieure ou la phase inférieure étant filtrée dans son filtre à flux transversal (M2, M3) respectif.

3. Procédé selon la revendication 1 ou 2, caractérisé en ce que l'on amène, dans le sens d'écoulement du mélange de fluides et en amont du séparateur de phases (T1), une solution brute constituée de ce mélange de fluides avec ses impuretés, à un filtre préliminaire (F1) séparant les impuretés grossières.

4. Procédé selon la revendication 3, caractérisé en ce que, entre le séparateur de phases (T1) et le filtre préliminaire (F1), on amène la solution brute libérée de ses impuretés grossières à un dispositif de décantation (B1, 10), qui sépare au moins partiellement les impuretés sédimentables.

5. Procédé selon la revendication 4, caractérisé en ce que le rétentat sortant du filtre à flux transversal respectif (M2, M3) à l'intérieur du système de recyclage (K2, K3) respectif est retourné, dans un courant partiel, vers le dispositif de décantation (Bl, 10).

6. Dispositif pour réaliser le procédé selon l'une des revendications 1 à 5, caractérisé en ce que ledit dispositif est équipé d'un séparateur de phases (T1) ainsi que d'au moins deux unités filtrantes (M2, M3), faisant respectivement partie d'un système de recyclage (K2, K3) séparé, et en ce que le séparateur de phases (T1) reçoit de façon répétée une partie du rétentat sortant de l'unité filtrante (M2, M3) respective et que les unités filtrantes (M2, M3) reçoivent de façon répétée l'autre partie du rétentat.

7. Dispositif pour réaliser le procédé selon la revendication 6, caractérisé en ce que chaque système de recyclage (K2, K3) présente un réservoir (B2, B3) dont le contenu peut être acheminé par un dispositif de déplacement (P2, P3) à l'unité filtrante (M2, M3), laquelle présente un moyen d'évacuation du filtrat et en ce qu'une tuyauterie munie de ramifications rejette dans le réservoir (B2, B3) une partie du rétentat provenant de l'unité filtrante (M2, M3), l'autre partie du rétentat étant amenée au séparateur de phases (T1) à travers un autre réservoir (B1).

8. Dispositif selon la revendication 7, caractérisé en ce que le réservoir respectif (B1, B2, B3) présente un point de vidange (V1, V2, V3) du concentrat qui se forme et, par le moyen de la tuyauterie se répartissant en ramifications, le rétentat sortant de l'unité filtrante (M2, M3) peut être ramené partiellement, en un courant partiel, vers le dispositif de décantation (B1, 10).

9. Dispositif selon la revendication 8, caractérisé en ce que le dispositif de décantation (B1, 10) est une partie d'un réservoir de solution brute (B1), présentant un fond incliné (10) imperméable aux fluides, sur lequel peuvent se déposer les impuretés sédimentables, le filtre préliminaire (F1) pour les impuretés grossières étant disposé entre l'entrée du liquide brut et le réservoir de solution brute (B1) dont la sortie est raccordée à l'entrée du séparateur de phases (T1).

10. Dispositif selon la revendication 9, caractérisé en ce que, comme dispositifs de dégagement pour les systèmes de recyclage (K2, K3) et pour le transport des fluides provenant du réservoir de solution brute (B1) vers le séparateur de phases (T1), on utilise des pompes à fluides (P1, P2, P3), et que comme séparateur de phases (T1) on utilise un séparateur à plaques "Coalisier" et, comme unités filtrantes respectives, le filtre à flux transversal (M2, M3).

11. Dispositif selon l'une des revendications 7 à 10, caractérisé en ce que toutes les parties du dispositif seront disposées sur un véhicule de transport (14) mobile qui présente un système de commande et de contrôle du déroulement du procédé (16).
